# EUROPÄISCHE PATENTSCHRIFT

(11) **EP 1 346 867 B1**
(45) Veröffentlichungstag und Bekanntmachung des Hinweises auf die Patenterteilung: **09.05.2007**
(21) Anmeldenummer: 02006464.8
(22) Anmeldetag: 22.03.2002
(51) Int. Cl.: B60K 25/06

(54) **Angetriebene Zusatzeinrichtung an einem Kraftfahrzeug**
Driven auxiliary device on a motor vehicle
Dispositif complémentaire propulsé d'automobile

(43) Veröffentlichungstag der Anmeldung: 24.09.2003
(73) Patentinhaber: Ponte Vecchio Consult Sagl, 6600 Muralto (CH)
(72) Erfinder: Schübler, Hans Hubert, 45479 Mülheim an der Ruhr (DE)
(74) Vertreter: UEXKÜLL & STOLBERG

(56) Entgegenhaltungen:
- DE-A- 3 124 040
- DE-U- 29 919 012
- US-A- 5 563 451

## Beschreibung

Die Erfindung betrifft ein Zusatzelement für ein Kraftfahrzeug, insbesondere Lastkraftwagen, mit den Merkmalen des Oberbegriffes des Anspruches 1.

Ein derartiges, als Strom-Zusatzgenerator ausgebildetes Zusatzelement für Klein-Lastkraftwagen ist bereits aus der DE-U-299 19 012 bekannt. Der bekannte Strom-Zusatzgenerator ist außerhalb des Fahrzeugaufbaus angeordnet, um eine Geräuschbelästigung zu vermeiden und eine ausreichende Wärmeabfuhr sicherzustellen. Da unter dem Fahrzeugaufbau innerhalb des Fahrzeugrahmens von Klein-Lastkraftwagen ausreichend Platz in Längsrichtung gegeben ist, kann bei dieser Anordnung ein lang bauender Zusatzgenerator eingesetzt werden.

Neben Strom-Zusatzgeneratoren müssen Lastkraftwagen häufig auch mit anderen Versorgungsaggregaten wie etwa Kompressoren, Pumpen, Hydraulikpumpen oder Generatoren ausgerüstet werden, die von dem Motor des Lastkraftwagens mechanisch angetrieben werden. Ansonsten wäre ein weiterer Motor erforderlich, was jedoch wirtschaftlich nicht sinnvoll ist.

Bei Lastkraftwagen mit einem hohen zulässigen Gesamtgewicht, insbesondere bei Sattelzugmaschinen ergibt sich das Problem, dass der Raum an dem Chassis der Zugmaschine für das Anbringen derartiger Zusatzelemente eng begrenzt ist. Der Raum oberhalb des Chassis hinter der Fahrerkabine wird von dem Auflieger eingenommen, so dass an dieser Stelle keine Zusatzelemente angebracht werden können. Der einzig verbleibende Raum ist der unterhalb des Chassis zwischen der Vorder- und der Hinterachse. Allerdings ist bedingt durch den kurzen Radstand sowie die mittig verlaufende Antriebswelle für die Hinterachse auch hier nur vergleichsweise wenig Platz. Dies ist insbesondere auch deswegen der Fall, da in diesem Bereich neben den Zusatzelementen noch ein möglichst großer Kraftstofftank angebracht werden muss sowie ein Schmierstofftank.

Verstärkt wird das Platzproblem, wenn die Hinterachse der Zugmaschine als Zwillingsachse ausgeführt ist, was der Fall ist, wenn das zulässige Gesamtgewicht des Sattelzuges bei über 40 Tonnen liegt. Dann verringert sich der zwischen den Achsen zur Verfügung stehende Raum weiter, da in einem solchen Fall die Gesamtlänge der Zugmaschine nahezu unverändert bleibt.

Der Antrieb der Zusatzelemente erfolgt über eine Gelenkwelle, um einerseits das Zusatzelement schwingungstechnisch von dem Rest des Fahrzeugs zu entkoppeln und andererseits eine vergleichsweise einfache Montage bzw. Demontage des Zusatzelements zu ermöglichen. Bei dem Einsatz von Gelenkwellen ist es aber zwingend erforderlich, dass bestimmte Randbedingungen eingehalten werden, da sich sonst die Lebensdauer der Gelenkwellen drastisch reduziert. Insbesondere ist darauf zu achten, dass der sogenannte Beugungswinkel der Gelenkwelle in Abhängigkeit von der Drehzahl einen bestimmten Wert nicht überschreitet.

Aus dieser winkelbedingten Randbedingung ergibt sich folgendes. Bei einem bestimmten Abstand zwischen der Drehachse des Abtriebsflansches am Getriebe und der Drehachse des Antriebsflansches am Zusatzelement ist ein Mindestabstand zwischen dem Abtriebsflansch und dem Antriebsflansch in Richtung der Drehachse des Antriebsflansches, also in der Regel in Fahrtrichtung des Fahrzeuges, festgelegt. Dieser Mindestabstand führt aber bei größeren und schwereren Lastkraftwagen zu Konflikten mit dem zur Verfügung stehenden Platz unterhalb des Chassis. Außerdem wird durch die Gelenkwelle weiterer Raum verbaut, der sonst anderweitig genutzt werden könnte.

Der Erfindung liegt daher das technische Problem zugrunde, ein Zusatzelement gemäß dem Oberbegriff des Anspruchs 1 bereitzustellen, das möglichst platzsparend und in einem geringen Abstand zu dem Getriebe mittels einer Gelenkwelle mit diesem verbunden werden kann und durch den Motor des Kraftfahrzeugs mechanisch angetrieben wird.

Dieses zuvor aufgezeigte technische Problem wird durch ein Zusatzelement mit den Merkmalen des Anspruchs 1 gelöst.

Erfindungsgemäß ist es als besonders vorteilhaft erkannt worden, dass der Antriebsflansch im wesentlichen in die gleiche Richtung weist wie der Abtriebsflansch, dass die Gelenkwelle das Getriebe mit einer Umlenkungsvorrichtung verbindet und dass die Umlenkungsvorrichtung die Drehbewegung der Gelenkwelle auf den Antriebsflansch überträgt. Damit wird ermöglicht, dass die Gelenkwelle nahezu vollständig innerhalb des durch die restlichen Teile des Zusatzelementes eingenommenen Raumes verläuft und nicht seitlich darüber oder daneben hinausragt. Es bleibt aber trotzdem gewährleistet, dass die Gelenkwelle eine hinreichende Länge hat, um den Abstand des Abtriebsflansches und des Antriebsflansches in Richtung der Drehachse des Abtriebsflansches zu überbrücken, ohne dass der Beugungswinkel einen kritischen Bereich erreicht.

Die Umlenkungsvorrichtung als Riemenantrieb mit einer oberen Riemenscheibe und einer unteren, mit dem Antriebsflansch verbundenen Riemenscheibe auszubilden, führt zunächst zu einer einfachen und damit kostengünstigen Lösung. Außerdem kann das Zusatzelement leicht an unterschiedliche Fahrzeugtypen angepasst werden. Es ist lediglich notwendig, den Abstand der Riemenscheiben voneinander zu verändern und daran die Länge des Keilriemens anzupassen.

Wird die Antriebswelle, auf der die untere Riemenscheibe angebracht ist, lediglich auf der vom Abtriebsflansch abgewandten Seite gelagert, wird die Gesamtlänge des Zusatzelements weiter minimiert, da der Abstand zwischen der unteren Keilriemenscheibe und dem Antriebsflansch minimal gewählt werden kann und kein Raum für eine zusätzliche Lagerung vorgesehen werden muss.

Ist insbesondere ein großer Kraftschluss zwischen dem Getriebe auf der einen Seite und dem Zusatzelement auf der anderen Seite erforderlich, kann die Umlenkungsvorrichtung auch als ein Zahnradgetriebe ausgebildet sein.

Die in dem Zusatzelement angeordneten Versorgungsaggregate können ein Kompressor, eine Pumpe, insbesondere Hydraulikpumpe sowie ein Generator sein.

Für die Ausrichtung der Drehachse des Antriebsflansches am Versorgungsaggregat gibt es grundsätzlich zwei Möglichkeiten. Zum einen verläuft die Drehachse des Antriebsflansches im wesentlichen parallel zur Drehachse des am Getriebe angeordneten Abtriebsflansches, also in der Regel parallel zur Fahrtrichtung.

Zum anderen kann die Drehachse des Antriebsflansches des Versorgungsaggregats senkrecht, also quer zur Drehachse des Abtriebsflansches des Getriebes angeordnet sein und somit senkrecht zur Abtriebsachse des Getriebes und damit zur Fahrtrichtung stehen. Dadurch ist ein platzsparender Einbau des Versorgungsaggregats möglich und der durch das Zusatzelement eingenommene Raum kann minimiert werden. Denn die Längsrichtung des Versorgungsaggregates ist in der Regel größer als die Quererstreckung.

In dem Fall, dass das Versorgungsaggregat quer zur Fahrtrichtung eingebaut ist, ist in bevorzugter Weise ein Winkelgetriebe vorgesehen, das zwischen der Umlenkungsvorrichtung und dem Antriebsflansch des Versorgungsaggregats angeordnet ist, so dass die Drehbewegung auf das Versorgungsaggregat übertragen wird.

Insbesondere bei hohen Drehzahlen ist es vorteilhaft, wenn an der dem Antriebsflansch des Winkelgetriebes gegenüberliegenden Seite ein Lüfterrad vorgesehen ist, das mit angetrieben wird. Damit wird das Getriebe gekühlt um zu verhindern, dass die Temperatur des Getriebeöls einen kritischen Wert überschreitet und das Winkelgetriebe Schaden nimmt.

Durch einen Beugungswinkel der Gelenkwelle der kleiner als 15° vorzugsweise kleiner 10° ist, ergibt sich zum einen ein geringer Verschleiß an der Gelenkwelle. Zum anderen ist dann gewährleistet, dass das Zusatzelement schwingungstechnisch hinreichend gut von dem Rest des Fahrzeugs entkoppelt ist.

Im folgenden wird die Erfindung nur beispielhaft anhand der Zeichnungen beschrieben. Dabei zeigt
- Fig. 1: die Draufsicht eines an einem Lastkraftwagen montierten erfindungsgemäßen Zusatzelements und
- Fig. 2: eine Seitenansicht des in Fig. 1 dargestellten Zusatzelementes.

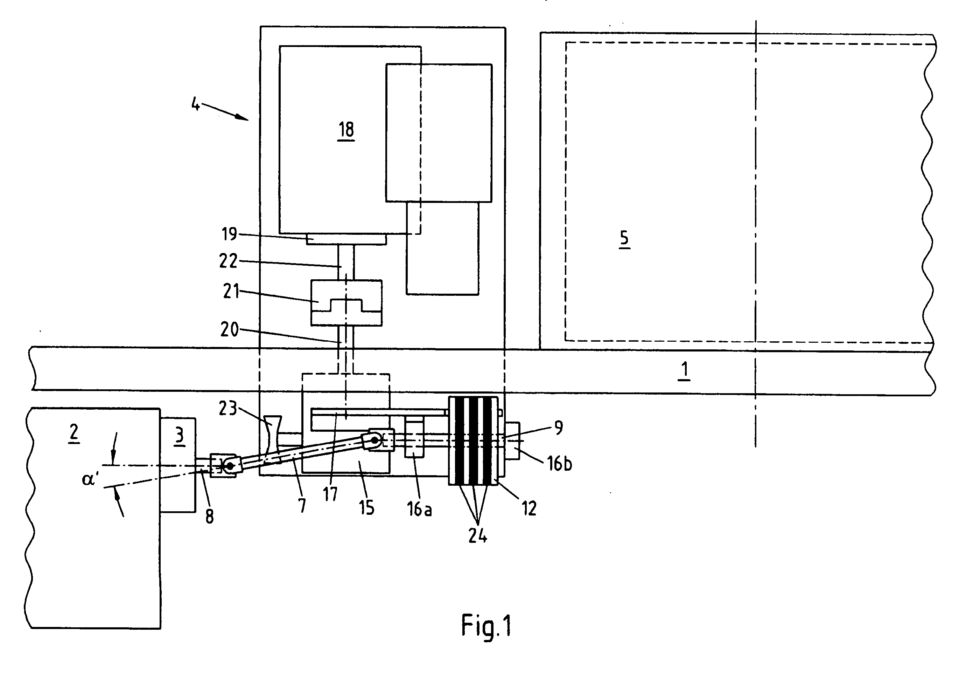

In Fig. 1 ist zunächst innerhalb eines nur schematisch angedeuteten Fahrzeugrahmens 1 ein Getriebe 2 zusammen mit einem Abtriebsflansch 3 gezeigt. Seitlich versetzt zu dem Getriebe 1 ist ein Zusatzelement 4 am Fahrzeugrahmen 1 befestigt. Ebenfalls nur schematisch in Fig. 1 dargestellt ist weiterhin ein Rad 5 zusammen mit einem Schutzblech 6. Das Zusatzelement 4 umfasst in diesem Ausführungsbeispiel als Versorgungsaggregat einen Kompressor 18.

Das Zusatzelement 4 weist eine Gelenkwelle 7 auf, die mit einem Ende mit dem Abtriebsflansch 3 über eine Abtriebswelle 8 am Getriebe 2 verbunden ist. Das andere Ende der Gelenkwelle 7 ist mit einer Antriebswelle 9 einer Umlenkungsvorrichtung 10 verbunden.

Die Umlenkungsvorrichtung 10 ist als Riemenantrieb ausgeführt und umfasst neben der Antriebswelle 9 eine Abtriebswelle 11. Auf der Antriebswelle 9 ist eine Riemenscheibe 12 und auf der Abtriebswelle 11 eine Riemenscheibe 13 angeordnet, die über drei Keilriemen 24 miteinander verbunden sind. Dabei kann auch nur ein Keilriemen 24 zum Einsatz kommen. Die Umlenkungsvorrichtung 10 überträgt also die Drehbewegung der Antriebswelle 9 auf die dazu parallel verlaufende Abtriebswelle 11 und somit auf den Antriebsflansch 14.

Die obere Antriebswelle 9 ist in zwei Lagern 16a und 16b gelagert, wobei die Lager 16a und 16b an einer Konsole 17 befestigt sind. Die Konsole 17 wiederum ist auf einem Winkelgetriebe 15 aufgeschraubt.

Weiterhin ist ein Winkelgetriebe 15 vorgesehen, an dem der Antriebsflansch 14 befestigt ist. Die Drehachse des Antriebsflansches 14 verläuft erstens im wesentlichen parallel zur Drehachse des Abtriebsflansches 3 und ist zweitens zu dieser beabstandet angeordnet. Der Antriebsflansch 14 am Winkelgetriebe 15 ist ferner so angeordnet, dass er im wesentlichen in die gleiche Richtung weist wie der Abtriebsflansch 3 des Getriebes 2. Im Vergleich zum Antriebsflansch 14 weisen die Riemenscheiben 12 und 13 einen größeren Abstand zum Abtriebsflansch 3 auf. Damit liegt aus Sicht des Getriebes 2 die Umlenkungsvorrichtung 10 hinter dem Antriebsflansch 14.

Die Lager 16a und 16b und ein Lager 16c, das die untere Abtriebswelle 11 aufnimmt, sind so ausgebildet, dass sie die Kräfte senkrecht zur Antriebswelle 9 und zur Abtriebswelle 11 aufnehmen können.

Das Zusatzelement 4 weist als Versorgungsaggregat einen Kompressor 18 auf, wobei der Kompressor 18 in der Weise angeordnet ist, dass dessen Antriebsflansch 19 senkrecht zum Abtriebsflansch 3 bzw. Antriebsflansch 14 steht. Damit steht auch die Antriebswelle 22 des Kompressors 18 senkrecht zur Abtriebswelle 8 des Getriebes 2. Ein Ausgangsglied 20 des Winkelgetriebes 15 ist über die Kupplung 21 mit dem Antriebsflansch 19 des Kompressors 18 verbunden.

Zusätzlich ist an dem Winkelgetriebe 15 an der dem Antriebsflansch 14 gegenüberliegenden Seite ein Lüfterrad 23 angeordnet, das im Betrieb zur Kühlung des Winkelgetriebes 15 dient.

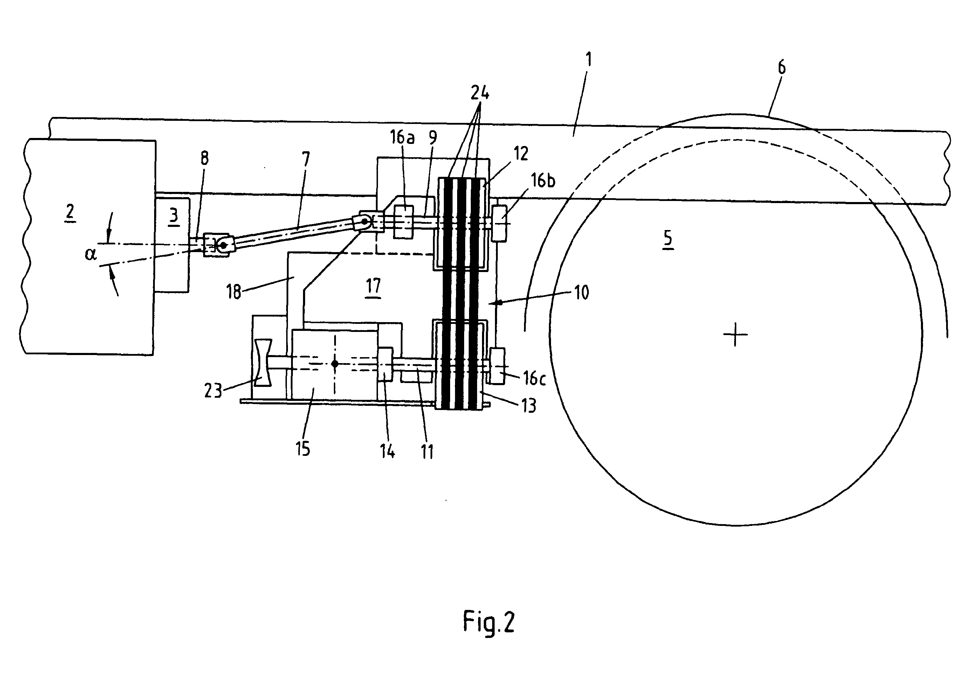

Der Vertikalbeugungswinkel α der Gelenkwelle 7 (siehe Fig. 2) und der Horizontalbeugungswinkel α' (siehe Fig. 1) sind so gewählt, dass der Beugungswinkel der Gelenkwelle 7 kleiner als 10° ist. Der Beugungswinkel ist dabei der Winkel, den die Gelenkwelle mit der Abtriebswelle 8 am Getriebe 3 bzw. mit der oberen Antriebswelle 9 einschließt.

Zum Betrieb des Kompressors 18 wird zunächst das Getriebe 3 derart betätigt, dass die im Abtriebsflansch 3 angeordnete Abtriebswelle 8 durch den Motor des Lastkraftwagens in Drehung versetzt wird. Dadurch dreht sich auch die Gelenkwelle 7 und treibt die obere Antriebswelle 9 mit der oberen Riemenscheibe 12 an. Durch die Keilriemen 24 wird auch die untere Riemenscheibe 13 in Drehung versetzt und damit auch die untere Antriebswelle 11. Das Ausgangsglied 20 des Winkelgetriebes 15 treibt dann über die Kupplung 21 den Kompressor 18 an. Gleichzeitig rotiert das an dem Winkelgetriebe 15 angeordnete Lüfterrad 23 und kühlt dadurch das Winkelgetriebe 15.

Durch die Umlenkungsvorrichtung 10 in Kombination mit der Anordnung des Antriebsflanschs 14 in der Weise, dass dieser in die gleiche Richtung weist wie der Abtriebsflansch 3, wird ermöglicht, dass die Gelenkwelle 7 im wesentliche in dem durch die restlichen Teile des Zusatzelements 4 eingenommenen Raum verläuft. Außerdem kann das Zusatzelement 4 sehr nahe an dem Getriebe 2 angeordnet werden, wobei trotzdem ein Beugungswinkel der Gelenkwelle 7 gewährleistet ist, der unterhalb des für die Gelenkwelle 7 kritischen Winkels liegt.

## Patentansprüche

1. Kraftfahrzeug, das einen Motor, ein einen Abtriebsflansch (3) aufweisendes Getriebe (2) sowie ein Zusatzelement aufweist,
- mit einem Versorgungsaggregat (18),
- mit einer Gelenkwelle (7),
- mit einem Antriebsflansch (14),
- wobei die Drehachse des Abtriebsflansches (3) und die Drehachse des Antriebsflansches (14) im wesentlichen parallel ausgerichtet und beabstandet zueinander angeordnet sind und
- wobei der Antriebsflansch (14) eine Drehbewegung auf das Versorgungsaggregat (18) überträgt,
**dadurch gekennzeichnet,**
- **dass** die Gelenkwelle (7) das Getriebe (2) mit einer Umlenkungsvorrichtung (10) verbindet,
- **dass** die Umlenkungsvorrichtung (10) die Drehbewegung der Gelenkwelle (7) auf den Antriebsflansch (14) überträgt und
- **dass** der Antriebsflansch (14) im Wesentlichen in die gleiche Richtung weist wie der Abtriebsflansch (3), so dass die Umlenkungsvorrichtung (10) aus Sicht des Getriebes (2) gesehen hinter dem Antriebsflansch angeordnet ist.

2. Kraftfahrzeug nach Anspruch 1,
**dadurch gekennzeichnet,**
**dass** die Umlenkungsvorrichtung (10) als Riemenantrieb ausgebildet ist.

3. Kraftfahrzeug nach Anspruch 2,
**dadurch gekennzeichnet,**
**dass** der Riemenantrieb eine obere Riemenscheibe (12) und eine untere Riemenscheibe (13) aufweist.

4. Kraftfahrzeug nach Anspruch 3,
**dadurch gekennzeichnet,**
**dass** die obere und die untere Riemenscheibe (12,13) mit mindestens einem Keilriemen (14) miteinander verbunden sind.

5. Kraftfahrzeug nach Anspruch 3 oder 4,
**dadurch gekennzeichnet,**
**dass** die Riemenscheiben (12,13) einen größeren Abstand zum Abtriebsflansch (3) als der Antriebsflansch (14) aufweist.

6. Kraftfahrzeug nach einem der Ansprüche 3 bis 5
**dadurch gekennzeichnet,**
**dass** die obere Riemenscheibe (12) mit einer oberen Antriebswelle (9) verbunden ist und die untere Riemenscheibe (13) mit einer unteren Abtriebswelle (11) verbunden ist.

7. Kraftfahrzeug nach Anspruch 6,
**dadurch gekennzeichnet,**
**dass** die untere Abtriebswelle (9, 11) nur auf dem vom Abtriebsflansch (3) abgewandten Seite der unteren Riemenscheibe (13) gelagert ist.

8. Kraftfahrzeug nach Anspruch 6 oder 7,
**dadurch gekennzeichnet,**
**dass** die Gelenkwelle (7) mit der oberen Antriebswelle (9) verbunden ist und der Antriebsflansch (14) mit der unteren Abtriebswelle (11) verbunden ist.

9. Kraftfahrzeug nach Anspruch 1,
**dadurch gekennzeichnet,**
**dass** die Umlenkungsvorrichtung (10) als Zahnradgetriebe ausgebildet ist.

10. Kraftfahrzeug nach Anspruch 1,
**dadurch gekennzeichnet,**
**dass** das Versorgungsaggregat als Kompressor (18) ausgebildet ist.

11. Kraftfahrzeug nach Anspruch 1,
**dadurch gekennzeichnet,**
**dass** das Versorgungsaggregat als Pumpe, insbesondere Hydraulikpumpe, ausgebildet ist.

12. Kraftfahrzeug nach Anspruch 1,
**dadurch gekennzeichnet,**
**dass** das Versorgungsaggregat als Generator ausgebildet ist.

13. Kraftfahrzeug nach einem der Ansprüche 10 bis 12,
**dadurch gekennzeichnet,**
**dass** die Drehachse eines Antriebsflansch (19) des Versorgungsaggregats senkrecht zur Drehachse des Abtriebsflansches (3) steht.

14. Kraftfahrzeug nach Anspruch 16,
**dadurch gekennzeichnet,**
**dass** ein Winkelgetriebe (15) vorgesehen ist, dessen Eingangsglied den Antriebsflansch (14) bildet und dessen Ausgangsglied (20) mit dem Antriebsflansch (19) des Versorgungsaggregats verbunden ist.

15. Kraftfahrzeug nach Anspruch 14,
**dadurch gekennzeichnet,**
**dass** das Winkelgetriebe (15) an der dem Eingangsglied gegenüberliegenden Seite ein Lüfterrad (23) aufweist.

16. Kraftfahrzeug nach Anspruch 14 oder 15,
**dadurch gekennzeichnet,**
**dass** das Winkelgetriebe (15) Kühlrippen aufweist.

17. Kraftfahrzeug nach einem der Ansprüche 1 bis 16,
**dadurch gekennzeichnet,**
**dass** der Beugungswinkel der Gelenkwelle (7) kleiner als 15° ist, vorzugsweise kleiner 10° ist.

## Claims

1. An auxiliary element for a motor vehicle, which has a motor and a transmission (2) with an output flange (3),
- with a supply aggregate (18),
- with a Cardan shaft (7),
- with a drive flange (14),
- wherein the rotational axis of the output flange (3) and the rotational axis of the drive flange (14) are aligned essentially parallel and spaced apart from each other, and
- wherein the drive flange (14) imparts a rotational motion to the supply aggregate (18),
**characterized in**
- **that** the Cardan shaft (7) connects the transmission (1) with a return device (10),
- **that** the return device (10) transfers the rotational motion of the Cardan shaft (7) to the drive flange (14), and
- **that** the drive flange (14) points in essentially the same direction as the output flange (3), so that the return device (10) is situated behind the drive flange from the transmission's(2) point of view.

2. The auxiliary element according to claim 1,
**characterized in**
**that** the return device (10) is designed as a belt drive.

3. The auxiliary element according to claim 2,
**characterized in**
**that** the belt drive has an upper pulley (12) and a lower pulley (13).

4. The auxiliary element according to claim 3,
**characterized in**
**that** the upper and lower pulley (12, 13) are interconnected with at least one V-belt (14).

5. The auxiliary element according to claim 3 or 4,
**characterized in**
**that** the pulleys (12, 13) are situated at a greater distance to the output flange (3) than to the drive flange (14).

6. The auxiliary element according to one of claims 3 to 5,
**characterized in**
**that** the upper pulley (12) is connected to an upper drive shaft (9), and the lower pulley (13) is connected to a lower output shaft (11).

7. The auxiliary element according to claim 6,
**characterized in**
**that** the lower output shaft (9, 11) is only mounted on the side of the lower pulley (13) facing away from the output flange (3).

8. The auxiliary element according to claim 6 or 7,
**characterized in**
**that** the Cardan shaft (7) is connected to the upper drive shaft (9), and the drive flange (14) is connected to the lower output shaft (11).

9. The auxiliary element according to claim 1,
**characterized in**
**that** the return device (10) is designed as a gear drive.

10. The auxiliary element according to claim 1,
**characterized in**
**that** the supply aggregate is designed as a compressor (18).

11. The auxiliary element according to claim 1,
**characterized in**
**that** the supply aggregate is designed as a pump, in particular a hydraulic pump.

12. The auxiliary element according to claim 1,
**characterized in**
**that** the supply aggregate is designed as a generator.

13. The auxiliary element according to claims 10 to 12,
**characterized in**
**that** the rotational axis of a drive flange (19) of the supply aggregate is situated perpendicular to the rotational axis of the output flange (3).

14. The auxiliary element according to claim 16,
**characterized in**
**that** an angular gear system (15) is provided, the input member of which forms the drive flange (14) and the output member (20) of which is connected to the drive flange (19) of the supply aggregate.

15. The auxiliary element according to claim 14,
**characterized in**
**that** the angular gear system (15) has a fan propeller (23) on the side opposite the input member.

16. The auxiliary element according to claim 14 or 15,
**characterized in**
**that** the angular gear system (15) has cooling ribs.

17. The auxiliary element according to one of claims 1 to 16,
**characterized in**
**that** the diffraction angle of the Cardan shaft (7) is less than 15°, preferably less than 10°.

## Revendications

1. Véhicule automobile comprenant un moteur, une transmission (2) comprenant une bride entraînée (3) ainsi qu'un élément additionnel,
avec une unité d'alimentation (18),
avec un arbre de transmission (7),
avec une bride d'entraînement (14),
dans lequel l'axe de rotation de la bride entraînée (3) et l'axe de rotation de la bride d'entraînement (14) sont agencés en étant sensiblement parallèles et éloignés l'un de l'autre et
dans lequel la bride d'entraînement (14) transmet une mouvement de rotation à l'unité d'alimentation (18),
**caractérisé en ce que**,
l'arbre de transmission (7) relie la transmission (2) à un dispositif de renvoi (10),
**en ce que** le dispositif de renvoi (10) transmet le mouvement de rotation de l'arbre de transmission (7) à la bride d'entraînement (14) et
**en ce que** la bride d'entraînement (14) se présente essentiellement dans la même direction que la bride entraînée (3), de sorte que le dispositif de renvoi (10) vu de la transmission (2) est agencé derrière la bride d'entraînement.

2. Véhicule automobile selon la revendication 1, **caractérisé en ce que**,
le dispositif de renvoi (10) est formé d'une transmission par courroie.

3. Véhicule automobile selon la revendication 2, **caractérisé en ce que**,
la transmission par courroie présente une poulie à courroie supérieure (12) et une poulie à courroie inférieure (13).

4. Véhicule automobile selon la revendication 3, **caractérisé en ce que**,
les poulies à courroie supérieure et inférieure (12, 13) sont reliées l'une à l'autre par au moins une courroie trapézoïdale (14).

5. Véhicule automobile selon la revendication 3 ou 4, **caractérisé en ce que**,
les poulies à courroie (12, 13) présentent une plus grande distance de la bride entraînée (3) que de la bride d'entraînement (14).

6. Véhicule automobile selon la revendication 3 à 5, **caractérisé en ce que**,
la poulie à courroie supérieure (12) est reliée à un arbre d'entraînement supérieur (9) et la poulie à courroie inférieure (13) est reliée à un arbre entraîné inférieur (11).

7. Véhicule automobile selon la revendication 6, **caractérisé en ce que**,
l'arbre entraîné inférieur (9, 11) est disposé uniquement du côté opposé à la bride entraînée (3) de la poulie à courroie (13).

8. Véhicule automobile selon la revendication 6 ou 7, **caractérisé en ce que**,
l'arbre de transmission (7) est relié à l'arbre d'entraînement supérieur (9) et la bride d'entraînement (14) est reliée à l'arbre entraîné inférieur (11).

9. Véhicule automobile selon la revendication 1, **caractérisé en ce que**, le dispositif de renvoi (10) est formé d'une transmission par engrenages.

10. Véhicule automobile selon la revendication 1, **caractérisé en ce que**,
le dispositif d'alimentation est formé d'un compresseur (18).

11. Véhicule automobile selon la revendication 1, **caractérisé en ce que**,
le dispositif d'alimentation est formé d'une pompe, en, particulier d'une pompe hydraulique.

12. Véhicule automobile selon la revendication 1, **caractérisé en ce que**,
le dispositif d'alimentation est formé d'un générateur.

13. Véhicule automobile selon l'une des revendications 10 à 12, **caractérisé en ce que**,
l'axe de rotation d'une bride d'entraînement (19) du dispositif d'alimentation est perpendiculaire à l'axe de rotation de la bride entraînée (3).

14. Véhicule automobile selon la revendication 16, **caractérisé en ce que**,
un engrenage angulaire (15) est prévu, dont l'élément d'entrée forme la bride d'entraînement (14) et dont l'élément de sortie (20) est relié à la bride d'entraînement (19) du dispositif d'alimentation.

15. Véhicule automobile selon la revendication 14, **caractérisé en ce que**,
l'engrenage angulaire (15) présente une roue de ventilateur (23) du côté opposé à l'élément d'entrée.

16. Véhicule automobile selon la revendication 14 ou 15, **caractérisé en ce que**,
l'engrenage angulaire (15) présente de ailettes de refroidissement.

17. Véhicule automobile selon l'une des revendications 1 à 16, **caractérisé en ce que**,
l'angle de déviation de l'arbre de transmission (7) est inférieur à 15°, de préférence inférieur à 10°.
